# EUROPÄISCHE PATENTSCHRIFT

(11) **EP 4 445 472 B1**
(45) Veröffentlichungstag und Bekanntmachung des Hinweises auf die Patenterteilung: **27.05.2026**
(21) Anmeldenummer: 23710250.4
(22) Anmeldetag: 02.03.2023
(51) Int. Cl.: H02J 7/00

(54) **ENTLADESYSTEM UND VERFAHREN ZUM ENTLADEN WENIGSTENS EINER ELEKTRISCHEN SPEICHEREINHEIT**
DISCHARGE SYSTEM AND METHOD FOR DISCHARGING AT LEAST ONE ELECTRICAL STORAGE UNIT
SYSTÈME DE DÉCHARGE ET PROCÉDÉ DE DÉCHARGE D'AU MOINS UNE UNITÉ D'ACCUMULATION ÉLECTRIQUE

(30) Priorität: 18.03.2022 EP 22162998; 31.03.2022 EP 22165759
(43) Veröffentlichungstag der Anmeldung: 16.10.2024
(73) Patentinhaber: Siemens Aktiengesellschaft, 80333 München (DE)
(72) Erfinder: SCHULTE, Sascha, 91315 Höchstadt (DE); TAUBENSEE, Sebastian, 04416 Markkleeberg (DE)
(74) Vertreter: Siemens Patent Attorneys
(86) Internationale Anmeldenummer: PCT/EP2023/055335
(87) Internationale Veröffentlichungsnummer: WO 2023/174713

(56) Entgegenhaltungen:
- WO-A1-2022/013170
- US-A- 5 747 966

## Beschreibung

Die Erfindung betrifft ein Entladesystem und Verfahren zum Entladen wenigstens einer elektrischen Speichereinheit.

Das Recycling gebrauchter elektrischer Energiespeicher, insbesondere von wiederaufladbaren Batteriespeichern, gewinnt im Sinne einer nachhaltigen Wirtschaft an Bedeutung. Auch die während der Batterieherstellung erzeugte Ausschussware, sollte im Sinne einer nachhaltigen Wirtschaft recycelt werden.

Für ein sicheres Recycling der Energiespeicher ist es notwendig, die schadhaften oder gebrauchten Energiespeicher zu entladen, so dass weitere Verwertungsschritte sicher durchgeführt werden können.

Derzeit werden für ein Entladen viele Speicherzellen in Reihe zu einem Verbund verschaltet. Jede Speicherzelle weist dabei typischerweise eine Zellspannung in einem Bereich von 3 V bis 4 V auf. Der Verbund wird dann bei mehreren 100 V mit einem Standardumrichter entladen.

Die Speicherzellen weisen in Abhängigkeit ihrer Vorbenutzung vor dem Entladevorgang unterschiedliche Ladezustände auf. Somit weisen die einzelnen Speicherzellen bei konstanter Entladerate zu unterschiedlichen Zeitpunkten eine ausreichend geringe Restspannung auf. Sobald diese ausreichend geringe Restspannung vorliegt, sollte diese Speicherzelle aus dem Verbund entfernt werden, um eine negative Wiederaufladung - und damit auch einen sicherheitskritischen Zustand, insbesondere Brandgefahr, zu vermeiden.

Nachteilig ist eine Entnahme somit zügig nötig, um ein sicheres Entladen zu gewährleisten. Weiterhin wird bei einer Entnahme einer Speicherzelle aus dem Verbund der Entladevorgang unterbrochen. Somit verzögert sich das Entladen des restlichen Verbundes deutlich.

Das Dokument WO 2022/013170 Al betrifft eine Batterieentladevorrichtung zur Entladung von wiederaufladbaren Batterien.

Das Dokument US 5 747 966 A betrifft eine Vorrichtung zum Laden/Entladen von Batterien. Hierbei umfasst die Vorrichtung ein Ladegerät, Dioden und Schalter.

Aufgabe der vorliegenden Erfindung ist es daher, ein Entladesystem und ein Verfahren zum Entladen elektrischer Speicher anzugeben, welches ein - im Vergleich zum Stand der Technik - schnelleres und sicheres Entladen ermöglicht.

Die Aufgabe wird erfindungsgemäße mit einem Entladesystem gemäß Anspruch 1 und einem Verfahren zum Entladen gemäß Anspruch 4 gelöst.

Das erfindungsgemäße Entladesystem für Akkumulatoren oder Superkondensatoren umfasst ein Steuergerät. Das Steuergerät umfasst eine Stromquelle und eine Recheneinheit. Das Entladesystem umfasst weiterhin eine Entlade-Einheit, welche wenigstens eine Speicheraufnahme-Einheit geeignet zur Aufnahme und elektrischen Kontaktierung eines Akkumulators oder Superkondensators umfasst. Weiterhin umfasst die Entlade-Einheit eine parallel zur Speicheraufnahme-Einheit angeordnete Diode, welche in Sperrrichtung bezogen auf eine Speicherspannung des Akkumulators oder Superkondensators in bestimmungsgemäßer Einbaurichtung der Speicheraufnahme-Einheit angeordnet ist. Es sind wenigstens zwei Entlade-Einheiten in Reihe angeordnet. Weiterhin umfasst das Entladesystem wenigstens eine Sensoreinheit zum Ermitteln der Spannung jedes in die Speicheraufnahme-Einheit eingesetzten Akkumulators oder Superkondensators. Das Steuergerät ist in Reihe mit den in Reihe geschalteten Entlade-Einheiten geschaltet.

Das erfindungsgemäße Verfahren zum Entladen wenigstens zweier Akkumulatoren oder Superkondensatoren umfasst mehrere Schritte. Zunächst erfolgt das Bereitstellen des erfindungsgemäßen Entladesystems. Anschließend wird jeweils ein Akkumulator oder Superkondensator in die Speicheraufnahme-Einheit eingefügt, wobei ein Stromkreis über die Steuereinheit, die Akkumulatoren oder Superkondensatoren und die Speicheraufnahme-Einheit zum Entladen gebildet wird. Es erfolgt das Entladen der Akkumulatoren oder Superkondensatoren, wobei der Entladestrom über das Steuergerät gesteuert wird. Es wird die Spannung der einzelnen Akkumulatoren oder Superkondensatoren mittels einer Sensoreinheit ermittelt. Darauf basierend wird ein Austauschwert für einen Akkumulator oder Superkondensator in der Recheneinheit ermittelt. Sobald der Austauschwert einen Wert Entfernen für einen Akkumulator oder Superkondensator annimmt, wird dieser Akkumulator oder Superkondensator aus der zugehörigen Speicheraufnahme-Einheit entfernt, wobei der Stromkreis nach dem Entfernen über die parallel angeordnete Diode erhalten bleibt.

Das erfindungsgemäße Entladesystem und das erfindungsgemäße Verfahren ermöglichen das Entladen einer Vielzahl von Akkumulatoren oder Superkondensatoren, welche zu Beginn des Entladevorgang uneinheitliche Ladezustände aufweisen. Vorteilhaft werden diese Akkumulatoren oder Superkondensator gleichzeitig Entladen, wobei ein Austausch eines einzelnen Akkumulators oder Superkondensator in dem Entladesystem während des Entladevorgang möglich ist. Somit werden vorteilhaft Tot-Zeiten des Entladesystems, welche ohne den Einsatz der Diode notwendig sind, vermieden. In anderen Worten ist es möglich, im industriellen Maßstab eine Vielzahl von Akkumulatoren und/ oder Superkondensatoren gleichzeitig zu entladen und somit für eine nachgeschaltete Aufbereitung vorzubereiten.

Als Akkumulatoren werden wiederaufladbaren elektrische galvanische Speichereinheiten verstanden. Eine alternative Bezeichnung sind wiederaufladbare Batteriespeichern.

Als Steuergerät wird in anderen Worten ein steuerbares Netzteil verstanden. Die Recheneinheit ist in anderen Worten der Controller, welche entscheidet, wie viel Leistung nötig ist.

Es ist zweckmäßig, dass die Diode in Durchlassrichtung den Strom der gesamten Reihe kontinuierlich tragen kann. Die Sperrspannung sollte zweckmäßigerweise wenigstens der Spannung eines Akkumulators oder Superkondensators entsprechen.

Es sind Leckströme durch die Diode möglich, welche aber das Entladesystem und Entladeverfahren nicht störend beeinflussen.

In einer vorteilhaften Ausgestaltung und Weiterbildung der Erfindung weist die Speicheraufnahme-Einheit einen Klemmanschluss, Laschen oder Schraubanschluss zur mechanischen Fixierung und elektrischen Verbinden des Akkumulators oder Superkondensators auf. Dies ermöglicht vorteilhaft das feste Verbinden des Akkumulators oder Superkondensators mit der Speicheraufnahme-Einheit, wobei ein sicheres Entladen der Akkumulatoren oder Superkondensatoren gewährleistet wird.

In einer weiteren vorteilhaften Ausgestaltung und Weiterbildung der Erfindung ist die Sensoreinheit in das Steuergerät oder die Entladeeinheit integriert. Vorteilhaft wird der Aufbau des Entladesystems auf diese Weise vereinfacht.

In einer weiteren vorteilhaften Ausgestaltung und Weiterbildung der Erfindung wird als Akkumulator eine einzelne Speicherzelle oder ein Parallelverbund wenigstens zweier Speicherzellen eingesetzt. Es ist in anderen Worten vorteilhaft möglich unterschiedliche Akkumulatoren in dem Entladesystem zu entladen. Insbesondere können entweder gebrauchte Akkumulatoren für einen Recyclingvorgang vorbereitet werden oder Ausschussware aus einer Batterieproduktion entladen werden, um auch diese wieder zu verwenden.

In einer weiteren vorteilhaften Ausgestaltung und Weiterbildung der Erfindung wird das Steuergerät mit wenigstens 10 A Strom und/oder wenigstens 100 W Leistung betrieben. Vorteilhaft können Standard-Industrieumrichter, welche in einem Bereich von 300 V bis 800 V arbeiten, eingesetzt werden. Dann ist es insbesondere möglich 100 bis 200 Speicherzellen in Reihe zeitgleich zu entladen.

In einer weiteren vorteilhaften Ausgestaltung und Weiterbildung der Erfindung nimmt der Austauschwert entweder den Wert Entladen oder Entfernen für jeweils einen Akkumulator oder Superkondensator an. In anderen Worten gibt es zwei Austauschwerte, von denen einer für Entladen und einer für Entfernen steht. Diese beiden Austauschwert werden nicht wortwörtlich von der Recheneinheit ausgegeben, sondern können auch mittels numerischen Werten eines binären Systems oder durch andere Worte oder Zeichen von der Recheneinheit ermittelt und ausgegeben werden. Mittels des Austauschwertes kann somit vorteilhaft entweder ein Benutzer den Akkumulator oder Superkondensator austauschen oder ein automatisiertes System eingreifen, um den Akkumulator oder Superkondensator auszutauschen. Das Auswerten der Spannung erfolgt vorteilhaft in der Recheneinheit mittels vorgegebener Grenzwerte.

In einer weiteren vorteilhaften Ausgestaltung und Weiterbildung der Erfindung nimmt der Austauschwert für eine mittels der Sensoreinheit gemessene Spannung in einem Bereich von mehr als 0 Volts bis 0,3 Volts den Wert Entfernen an. In diesem Bereich sind die Akkumulatoren oder Superkondensatoren ausreichend entladen, um recycelt zu werden. Sie sind aber auch nicht derart entladen, dass eine negative Spannung auftritt, welche zu gefährlichen Bränden des Entladesystems führen könnten.

In einer weiteren vorteilhaften Ausgestaltung und Weiterbildung der Erfindung nimmt der Austauschwert für eine mittels der Sensoreinheit gemessene Spannung in einem Bereich von 1,9 V bis 2,1 V, besonders bevorzugt von 2V, den Wert Entfernen an. Insbesondere für die Rohmaterialextraktion stellt sich überraschenderweise eine Spannung in einem Bereich von 1,9 V bis 2,1 V, besonders bevorzugt von 2 V, als besonders vorteilhaft dar.

In einer weiteren vorteilhaften Ausgestaltung und Weiterbildung der Erfindung unterbricht das Steuergerät bei einer mittels der Sensoreinheit ermittelten Spannung von weniger als 0 Volts eines Akkumulators oder Superkondensators den Stromfluss. Vorteilhaft wird somit vermieden, dass sicherheitsgefährdende Vorgänge, insbesondere ein Brand, in dem Entladesystem stattfindet. Vorteilhaft wird somit die Sicherheit des Entladesystems deutlich erhöht.

In einer weiteren vorteilhaften Ausgestaltung und Weiterbildung der Erfindung erfolgt das Einsetzen und Entfernen des Akkumulators oder Superkondensators automatisiert, insbesondere mittels eines Roboters. Vorteilhaft ist es somit möglich, eine Vielzahl von Akkumulatoren oder Superkondensatoren zeitgleich zu entladen, ohne dass das Eingreifen einer Fachperson nötig ist.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: ein Entladesystem mit drei Akkumulatoren während des Entladevorgang;
- Figur 2: ein Entladesystem mit zwei Akkumulatoren während des Entladevorgang;
- Figur 3: ein Verfahrensbild des Verfahrens zum Entladen wenigstens zweier Akkumulatoren.

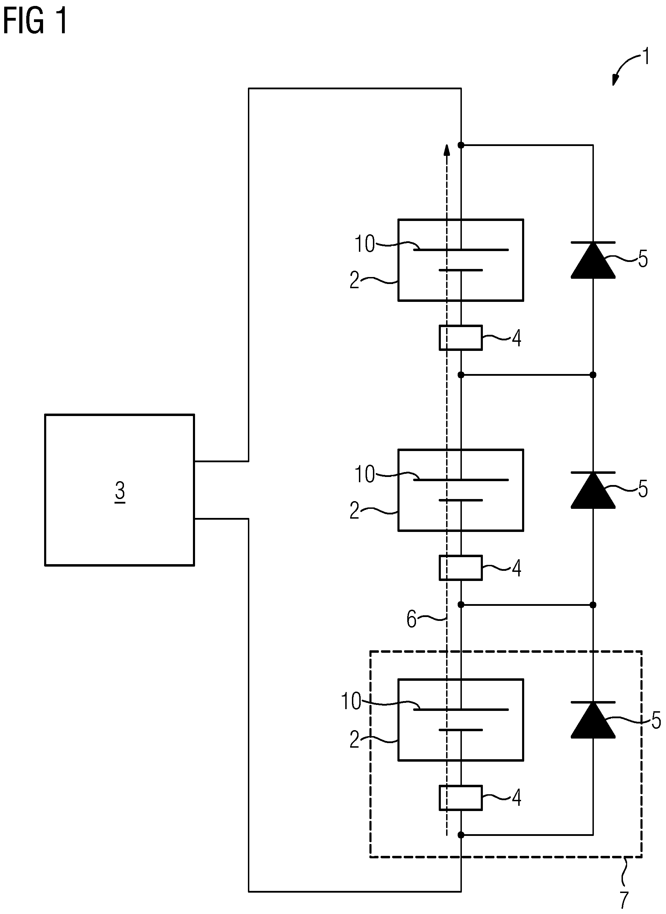

Figur 1 zeigt ein Entladesystem 1 mit drei Speicheraufnahme-Einheit 2, einem Steuergerät 3, drei Sensoreinheiten 4 und drei Dioden 5. Der Stromfluss 6 erfolgt über die drei Akkumulatoren (10), welche in den Speicheraufnahme-Einheiten 4 zum Entladen angeordnet sind. Das Steuergerät überwacht den Stromfluss. Die Sensoreinheit in 4 überwachen die Spannung der einzelnen Akkumulatoren (10). Basierend auf der ermittelten Spannung ermittelt die Recheneinheit, welche in diesem Beispiel in dem Steuergerät 3 integriert ist, einen Austauschwert für die jeweilig überwachten Akkumulatoren (10). Liegt die Spannung für einen der Akkumulatoren (10) in einem Bereich von 0 V bis 0,3 V, so nimmt der Austauschwert den Wert Entfernen an. Der entladene Akkumulator (10) wird anschließend durch eine Fachperson oder automatisch durch einen Roboter aus dem Entladesystem 1 entnommen.

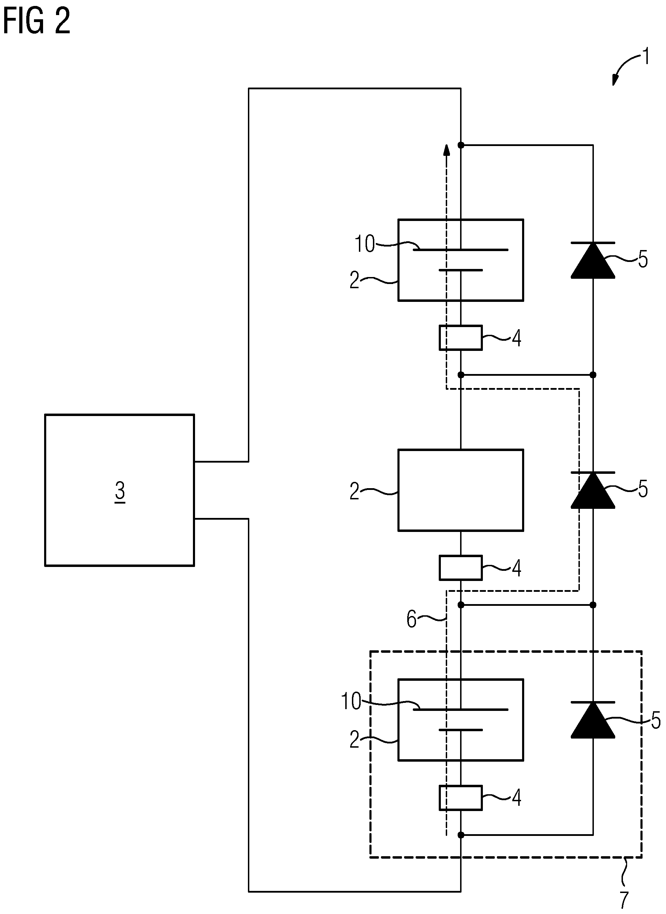

Figur 2 zeigt das Entladesystem 1 mit drei Speicheraufnahme-Einheit 2, wobei in zwei Speicheraufnahme-Einheiten 2 zwei Akkumulatoren 10 angeordnet sind. In der in Figur 2 mittleren dargestellten Speicheraufnahme-Einheit 2 ist kein Akkumulator zum Entladen angeordnet. Der Stromfluss 6 erfolgt nun über die beiden Akkumulatoren 10 in der jeweiligen Speicheraufnahme-Einheit 2 und die parallel zur Speicheraufnahme-Einheit 2 angeordnete Diode 5, in welcher kein Akkumulator 10 angeordnet ist.

Wird nun, entweder automatisiert oder mittels einer Fachperson, wiederum ein Akkumulator 10 in die mittlere Speicheraufnahme-Einheit 2 eingesetzt, so findet der Stromfluss 6 wiederum, wie in Figur 1 dargestellt, über die drei Speichenaufnahmeeinheiten 2 mit den Akkumulatoren 10 statt.

Eine alternative Lösung wäre es, anstelle der Dioden Schalter anzuordnen. Die Überbrückung der offenen Kontakte mit Schaltern ist allerdings nachteilig, da der Schalter mit einer Totzeit zum Entfernen der Batterie geschaltet werden muss und somit das Risiko eines Kurzschlusses gegeben ist. Vorteilhaft wird somit mit dem erfindungsgemäßen Einsatz der Dioden das sichere und kontinuierliche Betreiben des Entladesystems ermöglicht.

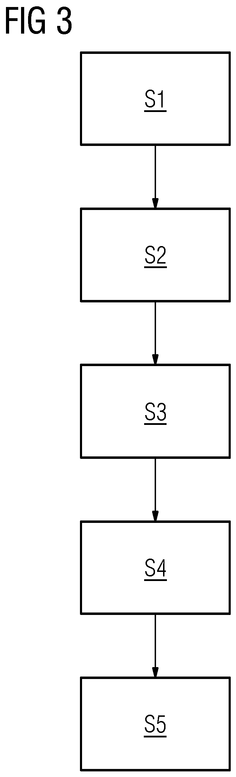

Figur 3 zeigt ein Verfahrensschema des Verfahrens zum Entladen von Akkumulatoren ziehen. In einem ersten Schritt S1 erfolgt das Bereitstellen eines Entladesystems 1. In einem zweiten Schritt S2 erfolgt das Einfügen eines Akkumulators 10 in die Speicheraufnahme-Einheit 2, wobei ein Stromkreis über die Steuereinheit 3, die Akkumulatoren 10 und die Speicheraufnahme-Einheit 4 zum Entladen gebildet wird. In einem dritten Schritt S3 erfolgt das Entladen der Akkumulatoren 10, wobei der Entladestrom über das Steuergerät 3 gesteuert wird. In einem vierten Schritt S4 erfolgt das Ermitteln der Spannung des einzelnen Akkumulators 10 mittels einer Sensoreinheit 4. Weiterhin erfolgt das Ermitteln eines Austauschwertes für einen Akkumulator 10 in der Recheneinheit. In einem nächsten fünften Schritt S5 erfolgt das Entfernen wenigstens eines entladenen Akkumulators 10 aus der zugehörigen Speicheraufnahme-Einheit 2, sobald der Austauschwert einen Wert Entfernen annimmt, wobei der Stromkreis nach dem Entfernen über die parallel angeordnete Diode erhalten bleibt.

### Bezugszeichenliste

- 1: Entladesystem
- 2: Speicheraufnahme-Einheit
- 3: Steuergerät
- 4: Sensoreinheit
- 5: Diode
- 6: Stromfluss
- 7: Entlade-Einheit
- 10: Akkumulator

- S1: Bereitstellen eines Entladesystems
- S2: Einfügen eines Akkumulators in die Speicheraufnahme-Einheit
- S3: Entladen der Akkumulatoren
- S4: Ermitteln der Spannung einzelner Akkumulatoren und Ermitteln eines Austauschwertes
- S5: Entfernen eines entladenen Akkumulators

## Patentansprüche

1. Entladesystem (1) für Akkumulatoren (10) oder Superkondensatoren, umfassend:
- Ein Steuergerät (3), umfassend eine Stromquelle und eine Recheneinheit,
- eine Entlade-Einheit (7), umfassend wenigstens eine Speicheraufnahme-Einheit (2) geeignet zur Aufnahme und elektrischen Kontaktierung eines Akkumulators oder Superkondensators, eine parallel zur Speicheraufnahme-Einheit (2) angeordnete Diode (5) in Sperrrichtung bezogen auf eine Speicherspannung des Akkumulators (10) oder Superkondensators in bestimmungsgemäßer Einbaurichtung der Speicheraufnahme-Einheit, wobei wenigstens zwei Entlade-Einheiten (7) in Reihe angeordnet sind, und ein Stromkreis über das Steuergerät (3), den eingesetzten Akkumulatoren (10) oder Superkondensatoren und die Speicheraufnahme-Einheit (2) zum Entladen ausgebildet wird; wobei
- wenigstens eine Sensoreinheit (4) zum Ermitteln der Spannung jedes einzelnen in die Speicheraufnahme-Einheit (2) eingesetzten Akkumulators (10) oder Superkondensators,
wobei das Steuergerät (3) in Reihe mit den in Reihe geschalteten Entlade-Einheiten (7) geschaltet ist, wobei
- die Recheneinheit dazu ausgebildet ist, einen Austauschwert für den Akkumulator (10) oder Superkondensator zu ermitteln; wobei
- die Speicheraufnahme-Einheit (2) ein Entfernen eines entladenen Akkumulators (10) oder Superkondensators aus der zugehörigen Speicheraufnahme-Einheit (2) ermöglicht, sobald der Austauschwert einen Wert Entfernen annimmt, wobei der Stromkreis nach dem Entfernen über die parallel angeordnete Diode (5) erhalten bleibt; wobei
- die Recheneinheit weiterhin dazu ausgebildet ist, den Austauschwert derart zu ermitteln, dass für eine mittels der Sensoreinheit (4) gemessene Spannung in einem Bereich von mehr als 0 V bis 0,5 V, insbesondere von mehr al 0 V bis 0,3 V, den Wert Entfernen annimmt.

2. Entladesystem (1) nach Anspruch 1, wobei die Speicheraufnahme-Einheit (2) einen Klemmanschluss, Laschen oder Schraubanschluss zum mechanischen Fixieren und elektrischen Verbinden des Akkumulators (10) oder Superkondensators aufweist.

3. Entladesystem (1) nach einem der vorhergehenden Ansprüche, wobei die Sensoreinheit (4) in das Steuergerät (3) oder die Entlade-Einheit (7) integriert ist.

4. Verfahren zum Entladen wenigstens zweier Akkumulatoren (10) oder Superkondensatoren, umfassend mehrere Schritte:
- Bereitstellen eines Entladesystems (1) gemäß den vorhergehenden Ansprüchen,
- Einfügen eines Akkumulators (10) oder Superkondensators in die Speicheraufnahme-Einheit (2), wobei ein Stromkreis über das Steuergerät (3), die Akkumulatoren (10) oder Superkondensatoren und die Speicheraufnahme-Einheit (2) zum Entladen gebildet wird,
- Entladen der Akkumulatoren (10) und/oder Superkondensatoren, wobei der Entladestrom über das Steuergerät (3) gesteuert wird,
- Ermitteln der Spannung des einzelnen Akkumulators (10) oder Superkondensators mittels einer Sensoreinheit (4) und Ermitteln eines Austauschwertes für einen Akkumulator (10) oder Superkondensator in der Recheneinheit,
- Entfernen eines entladenen Akkumulators (10) oder Superkondensators aus der zugehörigen Speicheraufnahme-Einheit (2) sobald der Austauschwert einen Wert Entfernen annimmt, wobei der Stromkreis nach dem Entfernen über die parallel angeordnete Diode (5) erhalten bleibt; wobei
- der Austauschwert für eine mittels der Sensoreinheit (4) gemessene Spannung in einem Bereich von mehr als 0 V bis 0,5 V, insbesondere von mehr al 0 V bis 0,3 V, den Wert Entfernen annimmt.

5. Verfahren nach Anspruch 4, wobei als Akkumulator (10) eine einzelne Speicherzelle oder ein Parallelverbund wenigstens zweier Speicherzellen eingesetzt wird.

6. Verfahren nach einem der Ansprüche 4 oder 5, wobei das Steuergerät (3) mit wenigstens 10 A Strom und/oder wenigstens 100 W Leistung betrieben wird.

7. Verfahren nach einem der Ansprüche 4 bis 6, wobei der Austauschwert entweder Entladen oder Entfernen für einen Akkumulator (10) oder Superkondensator annimmt.

8. Verfahren nach einem der Ansprüche 4 bis 7, wobei bei einer mittels der Sensoreinheit (4) ermittelten Spannung von weniger als 0 V das Steuergerät (3) den Stromfluss unterbricht.

9. Verfahren nach Anspruch 8, wobei das Einsetzen und Entfernen des Akkumulators (10) oder Superkondensators automatisiert, insbesondere mittels eines Roboters, erfolgt.

10. Verfahren nach einem der Ansprüche 4 bis 9, wobei wenigstens ein Superkondensator und ein Akkumulator zeitgleich entladen werden.

## Claims

1. Discharge system (1) for accumulators (10) or supercapacitors, comprising:
- a control device (3), comprising a power source and a computing unit,
- a discharge unit (7), comprising at least one storage device receiving unit (2) suitable for receiving and electrically contacting an accumulator or supercapacitor, a diode (5) which is arranged in parallel with the storage device receiving unit (2) and in a reverse direction relative to a stored voltage of the accumulator (10) or supercapacitor in a normal installation direction of the storage device receiving unit, wherein at least two discharge units (7) are arranged in series, and an electric circuit is formed for the purpose of discharging via the control device (3), the inserted accumulators (10) or supercapacitors and the storage device receiving unit (2); wherein
- at least one sensor unit (4) is provided for ascertaining the voltage of each individual accumulator (10) or supercapacitor that is inserted into the storage device receiving unit (2),
wherein the control device (3) is connected in series with the series-connected discharge units (7), wherein
- the computing unit is designed to ascertain an exchange value for the accumulator (10) or supercapacitor; wherein
- the storage device receiving unit (2) allows removal of a discharged accumulator (10) or supercapacitor from the associated storage device receiving unit (2) as soon as the exchange value assumes a Remove value, wherein the electric circuit is maintained via the parallel-connected diode (5) following said removal; wherein
- the computing unit is additionally designed to ascertain the exchange value such that it assumes the value Remove for a voltage in a range from more than 0 V to 0.5 V, in particular more than 0 V to 0.3 V, as measured by the sensor unit (4).

2. Discharge system (1) according to claim 1, wherein the storage device receiving unit (2) has a clamping terminal, clips or screw terminal for mechanically fixing and electrically connecting the accumulator (10) or supercapacitor.

3. Discharge system (1) according to one of the preceding claims, wherein the sensor unit (4) is integrated into the control device (3) or the discharge unit (7).

4. Method for discharging at least two accumulators (10) or supercapacitors, comprising a plurality of steps:
- providing a discharge system (1) according to the preceding claims,
- loading an accumulator (10) or supercapacitor into the storage device receiving unit (2), wherein an electric circuit is formed for the purpose of discharging via the control device (3), the accumulators (10) or supercapacitors and the storage device receiving unit (2),
- discharging the accumulators (10) and/or supercapacitors, wherein the discharge current is controlled via the control device (3),
- ascertaining the voltage of the individual accumulator (10) or supercapacitor by means of a sensor unit (4) and ascertaining an exchange value for an accumulator (10) or supercapacitor in the computing unit,
- removing a discharged accumulator (10) or supercapacitor from the associated storage device receiving unit (2) as soon as the exchange value assumes a Remove value, wherein the electric circuit is maintained via the parallel-connected diode (5) following said removal; wherein
- the exchange value assumes the value Remove for a voltage in a range from more than 0 V to 0.5 V, in particular more than 0 V to 0.3 V, as measured by the sensor unit (4).

5. Method according to claim 4, wherein an individual storage cell or a parallel network of at least two storage cells is used as an accumulator (10).

6. Method according to one of claims 4 or 5, wherein the control device (3) is operated with a current of at least 10 A and/or a power of at least 100 W.

7. Method according to one of claims 4 to 6, wherein the exchange value assumes the value either Discharge or Remove for an accumulator (10) or supercapacitor.

8. Method according to one of claims 4 to 7, wherein the control device (3) interrupts the current flow if a voltage of less than 0 V is ascertained by the sensor unit (4).

9. Method according to claim 8, wherein the insertion and removal of the accumulator (10) or supercapacitor takes place automatically, in particular by means of a robot.

10. Method according to one of claims 4 to 9, wherein at least one supercapacitor and one accumulator are discharged simultaneously.

## Revendications

1. Système (1) de décharge d'accumulateurs (10) ou de supercondensateurs, comprenant :
- un appareil (3) de commande,
comprenant une source de courant et une unité informatique,
- une unité (7) de décharge,
comprenant au moins une unité (2) de réception d'accumulateur propre à recevoir et à mettre en contact électrique un accumulateur ou un supercondensateur, une diode (5) montée en parallèle à l'unité (2) de réception d'accumulateur dans le sens de blocage rapporté à une tension de l'accumulateur (10) ou du supercondensateur dans la direction de montage conforme aux prescriptions de l'unité de réception d'accumulateur, dans lequel au moins deux unités (7) de décharge sont montées en série et il est constitué, pour la décharge, un circuit passant par l'appareil (3) de commande, les accumulateurs (10) ou supercondensateurs insérés et l'unité (2) de réception d'accumulateur ; dans lequel
- au moins une unité (4) de capteur pour la détermination de la tension de chaque accumulateur (10) inséré individuellement dans l'unité (2) de réception d'accumulateur ;
dans lequel l'appareil (3) de commande est monté en série avec les unités (7) de décharge montées en série, dans lequel
- l'unité informatique est constituée pour déterminer une valeur de remplacement de l'accumulateur (10) ou du supercondensateur ; dans lequel
- l'unité (2) de réception d'accumulateur rend possible un retrait d'un accumulateur (10) ou d'un supercondensateur déchargé de l'unité (2) de réception d'accumulateur lui appartenant, dès que la valeur de remplacement prend une valeur de retrait, lequel circuit, reste après le retrait conservé en passant par la diode (5) montée en parallèle ; dans lequel
- l'unité informatique est constituée, en outre, pour déterminer la valeur de remplacement, de manière à ce que, pour une tension mesurée au moyen de l'unité (4) de capteur, elles prennent la valeur de retrait dans une plage de plus de 0 V à 0,5 V, en particulier de plus de 0 V à 0,3 V.

2. Système (1) de décharge suivant la revendication 1, dans lequel l'unité (2) de réception d'accumulateur a une borne à pince, une barrette ou une borne à vis pour la fixation mécanique et la connexion électrique de l'accumulateur (10) ou du supercondensateur.

3. Système (1) de décharge suivant l'une des revendications précédentes, dans lequel l'unité (4) de capteur est intégrée à l'appareil (3) de commande ou à l'unité (7) de décharge.

4. Procédé de décharge d'au moins deux accumulateurs (10) ou supercondensateurs, comprenant plusieurs stades :
- se procurer un système (1) de décharge suivant les revendications précédentes,
- insérer un accumulateur (10) ou un supercondensateur dans l'unité (2) de réception d'accumulateur, dans lequel on forme, pour la décharge, un circuit passant par l'appareil (3) de commande, les accumulateurs (10) ou supercondensateurs et l'unité (2) de réception d'accumulateur,
- décharger les accumulateurs (10) et/ou supercondensateurs, dans lequel on commande le courant de décharge par l'appareil (3) de commande,
- déterminer la tension de l'accumulateur (10) ou supercondensateur individuel au moyen d'une unité (4) de capteur et déterminer une valeur de remplacement d'un accumulateur (10) ou d'un supercondensateur dans l'unité informatique,
- retirer un accumulateur (10) ou un supercondensateur déchargé de l'unité (2) de réception d'accumulateur, qui lui appartient, dès que la valeur de remplacement prend une valeur de retrait, dans lequel le circuit, après le retrait, reste conservé en passant par la diode (5) montée en parallèle ; dans lequel
- la valeur de remplacement pour une tension, mesurée au moyen de l'unité (4) de capteur, prend la valeur de retrait dans une plage de plus de 0 V à 0,5 V, en particulier de plus de 0 V à 0,3 V.

5. Procédé suivant la revendication 4, dans lequel on insère comme accumulateur (10) une cellule individuelle d'accumulateur ou un groupement en parallèle d'au moins deux cellules d'accumulateur.

6. Procédé suivant l'une des revendications 4 ou 5, dans lequel on fait fonctionner l'appareil (3) de commande à un courant d'au moins 10 A et/ou à une puissance d'au moins 100 W.

7. Procédé suivant l'une des revendications 4 à 6, dans lequel la valeur de remplacement suppose, soit une décharge, soit un retrait d'un accumulateur (10) ou supercondensateur.

8. Procédé suivant l'une des revendications 4 à 7, dans lequel, pour une tension déterminée au moyen de l'unité (4) de capteur de moins de 0 V, l'appareil (3) de commande interrompt le flux de courant.

9. Procédé suivant la revendication 8, dans lequel l'insertion et le retrait de l'accumulateur (10) ou du supercondensateur s'effectuent de manière automatisée, en particulier au moyen d'un robot.

10. Procédé suivant l'une des revendications 4 à 9, dans lequel on décharge en même temps au moins un supercondensateur et un accumulateur.
